Europäisches Patentamt

European Patent Office

Office européen des brevets

(11) Veröffentlichungsnummer: **0 385 193**
**A2**

(12) **EUROPÄISCHE PATENTANMELDUNG**

(21) Anmeldenummer: **90102955.3**

(22) Anmeldetag: **15.02.90**

(51) Int. Cl.⁵: **B25J 15/02**

(30) Priorität: **02.03.89 DE 3906590**

(43) Veröffentlichungstag der Anmeldung:
**05.09.90 Patentblatt 90/36**

(84) Benannte Vertragsstaaten:
**DE ES FR GB IT**

(71) Anmelder: **ManuMatik Produktionssysteme GmbH**
Schlosserstrasse 15
D-7440 Nürtingen(DE)

(72) Erfinder: **Henzler, Adolf**
Talstrasse 51
**D-7440 Nürt.-Raidwangen(DE)**
Erfinder: **Henschel, Karl-Heinz**
Tiefenbachstrasse 19
**D-7440 Nürtingen(DE)**

(54) **Greifvorrichtung für Handhabungsgeräte.**

(57) Es wird eine Greifvorrichtung für Handhabungsgeräte mit einem Greiferrahmen (1), wenigstens einem Greiferarm (9) zum Halten wenigstens einer Spannbacke (14) und Mitteln zum Bewegen des Greiferarms aus einer Warteposition in eine Arbeitsposition und zurück beschrieben. Als Mittel zum Bewegen jedes Greiferarms (9) ist ein Kniehebelparallelogramm (6, 8, 8a) in Verbindung mit einer eine Schubstange (6) antreibenden Kolben-Zylinder-Einheit (2) vorgesehen. Die Kniegelenkhebel (8, 8a) sind einerseits an dem Greiferarm (9) und andererseits an der Schubstange (6) angelenkt. Jeder Greiferarm (9) ist seinerseits an einer Führungsschwinge (12) angelenkt, die am Greiferrahmen (1) schwenkbar gelagert ist. Der Abstand zwischen dem Anlenkpunkt und dem Festlager (13) der Führungsschwinge am Greiferrahmen ist groß gegen den Schwenkwinkel bei der Auslenkung durch den Greiferarm. Dadurch ist die Abweichung der Bewegungsbahn der Greiferarme von der Geraden vernachlässigbar klein.

Fig. 2

EP 0 385 193 A2

Die Erfindung betrifft eine Greifvorrichtung für Handhabungsgeräte mit einem Greiferrahmen, wenigstens einem Greiferarm zum Halten wenigstens einer Spannbacke und Mitteln zum Bewegen des Greiferarms aus einer Warteposition in eine Arbeitsposition und zurück.

In der Montagetechnik werden bei fortschreitender Automatisierung in zunehmendem Maße Greifer eingesetzt, um Werkstücke zu greifen, zu transportieren und positionsgenau abzusetzen. Dabei haben Parallelgreifer gegenüber anderen Greifern den großen Vorteil, daß sich das Greifzentrum auch bei unterschiedlichen Werkstücken immer an ein und derselben Stelle befindet und sich auch beim Öffnen und Schließen des Greifers nicht verlagert.

Der Erfindung liegt die Aufgabe zugrunde, eine Greifvorrichtung der eingangs beschriebenen Art weiter zu verbessern und dazu eine Greifvorrichtung anzugeben, die bei geringer Baugröße und möglichst einfachem konstruktiven Aufbau für kleine Arbeitshübe große Spannkräfte erzielt und in der Spannstellung selbstsperrend ausgebildet ist. Auf das Gehäuse bzw. den Greiferrahmen sollen möglichst geringe Spannkraftanteile wirken.

Gelöst wird diese Aufgabe erfindungsgemäß dadurch, daß als Mittel zum Bewegen des Greiferarms ein Kniehebelparallelogramm in Verbindung mit einem Linearantrieb vorgesehen ist, daß die Kniegelenkhebel des Kniehebelparallelogramms einerseits an dem Greiferarm und andererseits an der Schubstange des Linearantriebs angelenkt sind und daß Führungsmittel zum Führen des Greiferarms entlang einer vorgegebenen Bewegungsbahn vorgesehen sind. Gemäß einer bevorzugten Weiterbildung der Erfindung ist vorgesehen, daß symmetrisch beidseits der Schubstange und im wesentlichen parallel zu ihr wenigstens zwei Greiferarme angeordnet sind, daß jeder Greiferarm als Koppel eines Kniehebelparallelogramms vorgesehen ist, dessen Kniegelenkhebel einerseits am Greiferarm und andererseits an der Schubstange des Linearantriebs angelenkt sind und daß jedem Greiferarm ein Führungsmittel zum Führen des Greiferarms entlang einer vorgegebenen Bewegungsbahn zugeordnet ist. Diese symmetrische Anordnung der Greiferarme, welche die Spannbacken zum Aufnehmen und Halten der Werkstücke tragen, bewirkt, daß das Greifzentrum des Greifers beim Öffnen und Schließen der Spannbacken immer dieselbe Lage beibehält. Außerdem bewirkt diese symmetrische Anordnung der Greiferarme, daß sich die durch das Kniehebelparallelogramm übertragenen Spannkräfte kompensieren, ohne sie auf das Gehäuse bzw. den Greiferrahmen zu übertragen.

Um die Greiferarme definiert zu führen, sieht die Erfindung für jeden Greiferarm eine am Greiferrahmen schwenkbar gelagerte Führungsschwinge vor, an welcher der Greiferarm beweglich angelenkt ist. Durch die Führungsschwingen sind die Greiferarme bei linearen Bewegungen der Schubstange parallel und synchron in entgegengesetzten Richtungen entlang den durch die Führungsschwingen vorgegebenen Bewegungsbahnen aufeinanderzu oder umgekehrt geführt. Jede Führungsschwinge ist dabei in der Bewegungsrichtung des angelenkten Greiferarms schwenkbar. In besonders vorteilhafter Ausgestaltung der Erfindung ist der Abstand zwischen dem Schwenklager der Führungsschwinge am Greiferrahmen und dem Anlenkpunkt des Greiferarms an der Führungsschwinge groß im Verhältnis zur Länge der Auslenkung des Anlenkpunkts. Auf diese Weise wird erreicht, daß die Greiferarme mit den Spannbacken zwischen ihrer Warteposition und der Arbeitsposition eine nahezu geradlinige Bewegung ausführen. Die aufgrund der Schwenkbewegung der Führungsschwingen auftretende Abweichung von der rein geradlinigen Bewegung ist vernachlässigbar klein.

Als Linearantrieb ist gemäß der Erfindung eine mit dem Greiferrahmen bzw. dem Gehäuse fest verbundene druckmittelbetätigte Kolben-Zylinder-Einheit vorgesehen, deren Kolben die Schubstange antreibt. In dem vorgeschlagenen Greifer führt die Kolben-Zylinder-Einheit die einzige lineare Gleitbewegung aus, während alle anderen Bewegungen rotativ sind. Dadurch wird Verschleiß vermieden, so daß der erfindungsgemäß vorgeschlagene Greifer langfristig wartungsfrei betrieben werden kann.

In weiterer Ausgestaltung der Erfindung trägt die Schubstange zwei Lagerelemente, an denen die Kniegelenkhebel der Kniehebelparallelogramme schwenkbar angelenkt sind. Vorzugsweise sind an jedem Lagerelement symmetrisch zur Schubstange wenigstens zwei Kniegelenkhebel angelenkt. Auf diese Weise nehmen die Lagerelemente die Spannkräfte der Greifvorrichtung auf und neutralisieren sie, so daß auch die Kolben-Zylinder-Einheit weitgehend von diesen Spannkräften entlastet ist. Das führt ebenfalls zur Verringerung des Verschleißes der Kolben-Zylinder-Einheit.

In der Spannposition der Greiferarme verlaufen die Kniegelenkhebel gemäß einer weiteren Fortführung der Erfindung im wesentlichen rechtwinklig zu den Greifarmen und der Schubstange, so daß sie in dieser Position ihre stabile Strecklage einnehmen. Bei einem Druckabfall des Mediums in der Kolben-Zylinder-Einheit behalten die Greiferarme also ihre Spannposition bei, so daß die Gefahr einer Havarie nicht besteht.

Die Greifvorrichtung nach der Erfindung hat insbesondere den Vorteil, daß sie bei geringer Baugröße und relativ geringem Gewicht hohe Spannkräfte aufbringt und dabei höchstens geringe Spannkraftanteile auf das Gehäuse bzw. den Greiferrahmen überträgt. Damit kann der Greifer in Leichtbauweise konzipiert werden. Bei einem Druckabfall des Mediums in der Kolben-Zylinder-Einheit ist ein sicherer Havarieschutz gewährleistet, weil das Kniehebelparallelogramm in der Spannposition der Greiferarme selsthemmend bzw. selbstsperrend ausgebildet ist. Die Greifvorrichtung nach der Erfindung ist darüberhinaus sehr flexibel einsetzbar, weil sie an verschiedenen Seiten des Greifergehäuses an dem Handhabungsgerät montiert werden kann.

Die Erfindung wird nun anhand der Zeichnung näher erläutert. Es zeigen:

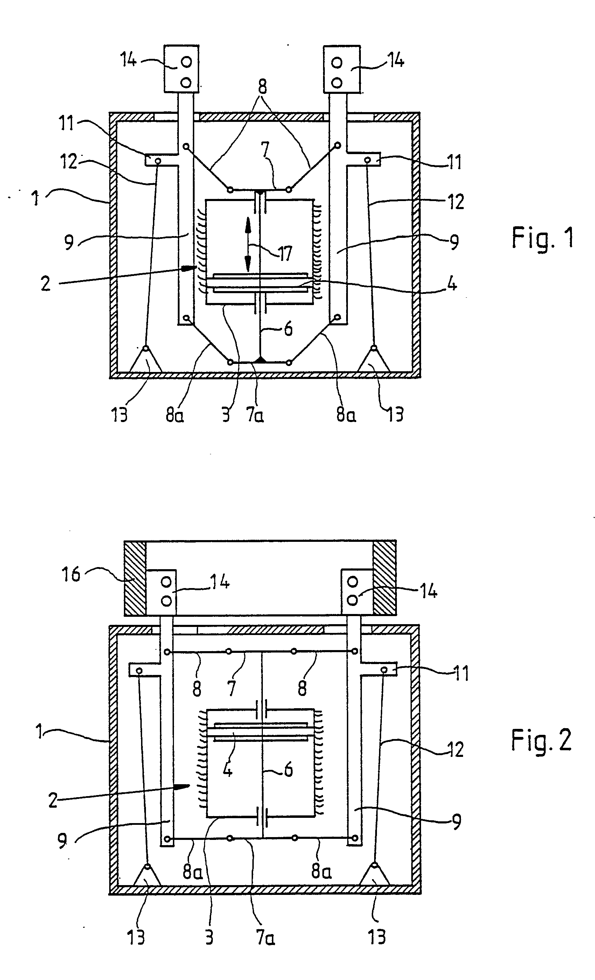

Figur 1 und 2 jeweils einen schematischen Querschnitt durch die Greifvorrichtung nach der Erfindung in unterschiedlichen Arbeitspositionen der Greiferarme.

Mit 1 ist der Greiferrahmen bezeichnet, der im dargestellten Fall als Greifergehäuse ausgebildet ist. Am Greiferrahmen 1 ist als Linearantrieb eine aus einem Zylinder 3 und einem Kolben 4 mit einer Schubstange 6 bestehende Kolben-Zylinder-Einheit 2 ortsfest angebracht, deren in üblicher Weise vorgesehene Druckmittelanschlüsse nicht dargestellt sind.

An den Enden der Schubstange 6, die mit dem Kolben 4 fest verbunden ist, sind Lagerelemente 7 und 7a angebracht. An jedem Lagerelement sind symmetrisch zur Schubstange 6 zwei Kniegelenkhebel 8 bzw. 8a gelagert, deren freie Enden jeweils an Greiferarmen 9 angelenkt sind. Jeder Greiferarm 9 bildet auf diese Weise die Koppel eines Kniehebelparallelogramms, das jeweils aus der Schubstange 6 mit den Lagerelementen 7 und 7a, den Kniegelenkhebeln 8 und 8a sowie den Greiferarmen 9 besteht.

Jeder Greiferarm 9 ist mit einem Winkelansatz 11 versehen, mit dem er an einer Führungsschwinge 12 angelenkt ist, die ihrerseits am Greiferrahmen bzw. Gehäuse in einem Festlager 13 schwenkbar gelagert ist.

Jeder Greiferarm 9 trägt eine Spannbacke 14, die am Ende des Greiferarms angeformt oder auf das Ende aufgesetzt und an diesem befestigt sein kann.

In der entspannten Warteposition nimmt der Kolben der Kolben-Zylinder-Einheit 2 seine untere Position ein, so daß die Schubstange 6 die Greiferarme 9 über die Gelenkhebelparallelogramme in ihrer Warteposition hält. Zum Ergreifen eines Werkstücks 16, im Fall der Figur 2 z.B. eines Ringes, mit den Spannbacken 14 wird der Kolben 4 der Zylinder-Kolben-Einheit 2 in Richtung des Doppelpfeils 17 nach oben bewegt, wodurch die Greiferarme 9 radial nach außen bewegt werden, bis die Kniegelenkhebel 8 ihre gestreckte Position und damit die Arbeits- bzw. Spannposition erreichen. Jetzt liegen die Spannbacken 14 mit ihrer vorgegebenen Spannkraft am Innenradius des Ringes 16 an, den der Greifer auf diese Weise aufnehmen, transportieren und in positionsgenauer Lager ablegen kann. Bei dem Spannvorgang werden die Greiferarme 9 von den Führungsschwingen 12 entlang einer vorgegebenen radial nach außen führenden Bahn geführt. Da der Abstand zwischen dem Festlager 13 und dem Anlenkpunkt der Führungsschwinge 12 an dem Winkelansatz des Greifarmes groß ist im Verhältnis zu dem Schwenkwinkel der Führungsschwinge bei der Spannbewegung, bewegen sich die Spannbacken praktisch entlang einer Geraden. Die Abweichung der Spannbackenbewegung von der Geraden ist dabei vernachlässigbar gering.

Figur 2 läßt erkennen, daß die Kniehebelparallelogramme in der Spannposition ihre gestreckte Lage einnehmen, in welcher die Kniegelenkhebel 8 und 8a senkrecht zu den Greifarmen 9 und zur Schubstange 6 verlaufen. In dieser Spannposition wirken die Kniehebelparallelogramme also selbstsperrend, so daß die Spannbacken 14 das Werkstück 16 auch bei einem Druckabfall im Zylinder 3 festhalten und nicht loslassen können. Havarien durch unplanmäßig fallengelassene Werkstücke bei einem Druckabfall im Zylinder 3 scheiden daher aus.

Die Darstellung der Figur 2 zeigt, daß die von den Spannbacken ausgehenden Spannkräfte auf die Lagerelemente 7 und 7a wirken und wegen der symmetrischen Anordnung der Kniehebelparallelogramme und der Greiferarme 9 von den Lagerelementen 7 und 7a neutralisiert werden. Auf das Gehäuse 1 bzw. den Greiferrahmen wirken daher über die Führungsschwingen nur minimale Spannkraftanteile, was eine Ausführung der Greifvorrichtung in Leichtbauweise ermöglicht. Auch eine Belastung der Schubstange 6 und der Kolben-Zylinder-Einheit 2 ist wegen der symmetrischen Anordnung der Greiferarme und der Kniehebelparallelogramme weitgehend ausgeschlossen. Das bedeutet, daß eine von Spannkräften weitgehend freie Kolbenbewegung möglich ist, was den Verschleiß an der Kolben-Zylinder-Einheit 2 herabsetzt.

Außer in der Kolben-Zylinder-Einheit 2 sind alle anderen Relativbewegungen zwischen miteinander verbundenen Elementen der Greifvorrichtung rotativ. Das schließt Verschleiß durch Relativbewegungen weitgehend aus, so daß die Greifvorrichtung langfristig wartungsfrei ist. Der dargestellte Greiferrahmen 1 ist an mehreren Seiten von Anschluß- und Betätigungsorganen frei und kann daher sehr flexibel in unterschiedlicher Orientierung und an unterschiedlichen Seiten an einem Handhabungsgerät befestigt werden.

Die beschriebene Greifvorrichtung weist zwei Greiferarme und zwei Spannbacken auf. Darauf ist die Erfindung aber nicht beschränkt. So können z.B. rings um die Schubstange 6 weitere Greiferarme 9 mit den zugehörigen, oben beschriebenen Antriebs-und Führungsmitteln angeordnet sein. Um die Kolben-Zylinder-Einheit 2 und den Greiferrahmen 1 von Spannkräften zu entlasten, sind sie vorzugsweise ebenfalls paarweise symmetrisch zur Schubstange 6 angeordnet, wobei die Lagerelemente 7 und 7a alle Kniegelenkhebel abstützen können. Alle konzentrisch angeordneten Greiferarme werden somit symmetrisch und synchron von dem Linearantrieb 2 bewegt.

## Ansprüche

1. Greifvorrichtung für Handhabungsgeräte mit einem Greiferrahmen, wenigstens einem Greiferarm zum Halten wenigstens einer Spannbacke und Mitteln zum Bewegen des Greiferarms aus einer Warteposition in eine Arbeitsposition und zurück, dadurch gekennzeichnet, daß als Mittel zum Bewegen des Greiferarms (9) ein Kniehebelparallelogramm (6, 8, 8a) in Verbindung mit einem Linearantrieb (2) vorgesehen ist, daß die Kniegelenkhebel (8, 8a) des Kniehebelparallelogramms einerseits an dem Greiferam (9) und andererseits an der Schubstange (6) des Linearantriebs (2) angelenkt sind und daß Führungsmittel (12) zum Führen des Greiferarms entlang einer vorgegebenen Bewegungsbahn vorgesehen sind.

2. Vorrichtung nach Anspruch 1, dadurch gekennzeichnet, daß symmetrisch beidseits der Schubstange (6) und im wesentlichen parallel zu ihr wenigstens zwei Greiferarme (9) angeordnet sind, daß jeder Greiferarm als Koppel eines Kniehebelparallelogramms vorgesehen ist, dessen Kniegelenkhebel (8, 8a) einerseits am Greiferarm (9) und andererseits an der Schubstange (6) des Linearantriebs (2) angelenkt sind und daß jedem Greiferarm ein Führungsmittel (12) zum Führen des Greiferarms entlang einer vorgegebenen Bewegungsbahn zugeordnet ist.

3. Vorrichtung nach Anspruch 1 oder 2, dadurch gekennzeichnet, daß als Führungsmittel eine am Greiferrahmen (1) schwenkbar gelagerte Führungsschwinge (12) vorgesehen ist und daß der Greiferarm an der Führungsschwinge angelenkt ist.

4. Vorrichtung nach Anspruch 2 oder 3, dadurch gekennzeichnet, daß jeder Greiferarm (9) an einer Führungsschwinge (12) angelenkt ist und daß die Greiferarme (9) bei linearen Bewegungen der Schubstange (6) durch die Führungsschwingen (12) parallel und synchron in entgegengesetzten Richtungen entlang den durch die Führungsschwingen vorgegebenen Bewegungsbahnen aufeinanderzu oder umgekehrt geführt sind.

5. Vorrichtung nach Anspruch 3 oder 4, dadurch gekennzeichnet, daß jede Führungsschwinge (12) in der Bewegungsrichtung des angelenkten Greiferarms (9) schwenkbar ist.

6. Vorrichtung nach einem der Ansprüche 3 bis 5, dadurch gekennzeichnet, daß der Abstand zwischen dem Schwenklager (13) der Führungsschwinge (12) und dem Anlenkpunkt des Greiferarms (9) groß ist im Verhältnis zur Länge der Auslenkung des Anlenkpunkts.

7. Vorrichtung nach einem der Ansprüche 1 bis 6, dadurch gekennzeichnet, daß als Linearantrieb eine mit dem Greiferrahmen (1) fest verbundene druckmittelbetätigte Kolben-Zylinder-Einheit (2) vorgesehen ist, deren Kolben (4) die Schubstange (6) antreibt.

8. Vorrichtung nach einem der Ansprüche 1 bis 7, dadurch gekennzeichnet, daß die Schubstange (6) zwei Lagerelemente (7) trägt, an denen die Kniegelenkhebel (8, 8a) schwenkbar angelenkt sind.

9. Vorrichtung nach Anspruch 8, dadurch gekennzeichnet, daß an jedem Lagerelement (7, 7a) symmetrisch zur Schubstange (6) wenigstens zwei Kniegelenkhebel (8, 8a) angelenkt sind.

10. Vorrichtung nach einem der Ansprüche 1 bis 9, dadurch gekennzeichnet, daß die Kniegelenkhebel (8, 8a) in der Spannposition der Greiferarme (9) im wesentlichen rechtwinklig zu den Greiferarmen und der Schubstange (6) verlaufen und so ihre stabile Strecklage einnehmen.

Fig. 1

Fig. 2